# FASCICULE DE BREVET EUROPEEN

(11) **EP 3 119 615 B1**
(45) Date de publication et mention de la délivrance du brevet: **02.05.2018**
(21) Numéro de dépôt: 15709965.6
(22) Date de dépôt: 17.03.2015
(51) Int. Cl.: B60C 9/28, B60C 9/20, B60C 11/03

(54) **PNEU POUR VÉHICULE DE GÉNIE CIVIL AYANT UNE ENDURANCE AMÉLIORÉE**
TIEFBAUFAHRZEUGREIFEN MIT VERBESSERTER BESTÄNDIGKEIT
CIVIL ENGINEERING VEHICLE TYRE WITH IMPROVED ENDURANCE

(30) Priorité: 18.03.2014 FR 1452241
(43) Date de publication de la demande: 25.01.2017
(73) Titulaire: Compagnie Générale des Etablissements Michelin, 63000 Clermont-Ferrand (FR)
(72) Inventeur: SPINNLER, Olivier, F-63040 Clermont-Ferrand Cedex 9 (FR); CHAUVIN, Dominique, F-63040 Clermont-Ferrand Cedex 9 (FR)
(74) Mandataire: Diernaz, Christian
(86) Numéro de dépôt international: PCT/EP2015/055510
(87) Numéro de publication internationale: WO 2015/140139

(56) Documents cités:
- DE-A1- 3 327 670
- US-A- 3 841 372
- US-A1- 2008 110 545
- US-B2- 8 091 600

## Description

### DOMAINE DE L'INVENTION

La présente invention concerne un pneu radial, destiné à équiper un véhicule lourd de type génie civil et, plus particulièrement la partie sommitale d'un tel pneu, c'est-à-dire la partie du pneu proche ou en contact avec un sol pendant le roulage.

Bien que non limitée à ce type d'application, l'invention est décrite en référence à un pneu radial de grande dimension, destiné à être monté sur un véhicule de type dumper, véhicule de transport de matériaux extraits de carrières ou de mines de surface. Typiquement un pneumatique radial pour véhicule lourd de type génie civil, au sens de la norme European Tyre and Rim Technical Organisation (E.T.R.T.O.), est destiné à être monté sur une jante dont le diamètre est au moins égal à 25 pouces.

### Définitions :

Plan médian équatorial : c'est un plan perpendiculaire à l'axe de rotation et passant par les points du pneu radialement les plus éloignés dudit axe. Ce plan divise le pneu en deux moitiés égales.

Un bloc est un élément en relief formé sur la bande de roulement qui est délimité par des creux ou rainures et comprenant des parois latérales et une face de contact destinée à venir en contact avec la chaussée. Cette face de contact a un centre géométrique défini comme le barycentre ou centre de gravité de la face.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu. Par direction oblique on entend une direction faisant un angle non nul avec la direction axiale et un angle inférieur à 90 degrés avec la direction circonférentielle.

Par direction circonférentielle, on entend une direction qui est tangente à tout cercle centré sur l'axe de rotation. Cette direction est perpendiculaire à la fois à la direction axiale et à une direction radiale.

Par axialement ou radialement vers l'extérieur, on entend une direction qui est orientée vers l'extérieur de la cavité interne du pneu.

Les conditions usuelles de roulage du pneu ou conditions d'utilisation sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

### ÉTAT DE LA TECHNIQUE

Un pneumatique radial de grande dimension comprend une partie sommitale, des flancs prolongeant de part et d'autre la partie sommitale, les flancs se terminant par des bourrelets. Ces bourrelets sont destinés à assurer la liaison mécanique entre le pneumatique et la jante sur laquelle il est monté.

La partie sommitale du pneu comprend une partie de renforcement surmontée radialement à l'extérieur par une bande de roulement destinée à venir en contact avec le sol lors du roulage. Cette bande de roulement comprend radialement à l'extérieur une surface de roulement destinée à assurer le contact entre la bande et le sol.

Un pneu radial comprend une armature de carcasse s'étendant dans la partie sommitale du pneu, les flancs et venant s'ancrer dans chaque bourrelet. Cette armature de carcasse est constituée d'une ou plusieurs couches de carcasse, chaque couche de carcasse comprenant une pluralité de câbles de renfort généralement métalliques disposés les uns à côté des autres dans un matériau élastomère, ces câbles de renfort étant orientés radialement. Les câbles de renfort métalliques de chaque couche de carcasse forment, en tout point, avec la direction circonférentielle, un angle compris entre 85° et 95°.

Par ailleurs cette armature de carcasse est surmontée radialement à l'extérieur dans la partie sommitale par une armature de sommet, cette dernière étant elle même surmontée par une bande de roulement.

Cette armature de sommet est formée par la superposition de plusieurs couches de sommet, chaque couche de sommet étant constituée de câbles de renfort, généralement métalliques, parallèles entre eux et enrobés dans un matériau élastomérique (dit : « mélange d'enrobage »). Cette armature de sommet est disposée radialement entre la bande de roulement et l'armature de carcasse.

L'armature de sommet comprend une armature de travail formée d'au moins deux couches de travail ayant pour fonction de ceinturer le pneu et de donner de la rigidité et de la tenue de route au pneu. Cette armature de sommet reprend à la fois des sollicitations mécaniques de gonflage, générées par la pression de gonflage du pneu, et des sollicitations mécaniques de roulage, générées lors du roulage du pneu sur un sol et transmis par sa bande roulement.

L'armature de travail comprend usuellement au moins deux couches de travail, radialement superposées les unes sur les autres, formées de renforts métalliques non élastiques, parallèles entre eux dans chaque couche et croisés d'une couche à la suivante, en formant, avec la direction circonférentielle, des angles au plus égaux à 60°, et, de préférence, au moins égaux à 15° et au plus égaux à 45°.

Par ailleurs, on distingue de façon usuelle les couches de protection formant une armature de protection destinée à la protection de l'armature de travail contre d'éventuelles agressions par des objets coupant et pouvant en conséquence fragiliser le pneu. Ces couches de protection sont disposées au plus près de la bande de roulement, c'est-à-dire radialement à l'extérieur de l'armature de travail.

L'armature de protection comprend généralement deux couches de protection, radialement superposées, formées de câbles métalliques dits « élastiques », parallèles entre eux dans chaque couche et croisés d'une couche à la suivante, en formant, avec la direction circonférentielle, des angles au moins égaux à 10° et au plus égaux à 35°, et, de préférence, au moins égaux à 15° et au plus égaux à 33°.

Parmi les renforts métalliques, on distingue usuellement les renforts métalliques « élastiques », tels que ceux utilisés dans les couches de protection, et les renforts métalliques non élastiques, tels que ceux utilisés dans les couches de travail.

Un renfort métallique élastique est caractérisé par un allongement structural As au moins égal à 0.4% et un allongement total à rupture At au moins égal à 3%. En outre, un renfort métallique élastique a un module élastique en extension au plus égal à 150 GPa, et compris usuellement entre 40 GPa et 150 GPa.

Un renfort métallique non élastique est caractérisé par un allongement relatif, sous une force de traction égale 10% de la force à rupture Fm, au plus égal à 0.2%. Par ailleurs, un renfort métallique non élastique a un module élastique en extension compris usuellement entre 150 GPa et 200 GPa.

Pour diminuer les sollicitations mécaniques de gonflage transmises à l'armature de travail, il est connu des documents FR 2 419 181 et FR 2 419 182 de disposer radialement entre l'armature de travail et l'armature de carcasse, une armature additionnelle, appelée aussi « bloc limiteur », dont la fonction est de reprendre au moins en partie les sollicitations mécaniques dues au gonflage du pneu.

Le document FR 2 419 181 décrit et revendique une armature de sommet comprenant une armature de travail, constituée d'au moins deux couches de travail dont les renforts métalliques forment, avec la direction circonférentielle, des angles opposés d'une couche à l'autre et au moins égaux à 30°, et une armature additionnelle ou bloc limiteur, comprenant au moins deux couches additionnelles dont les renforts métalliques sont très peu extensibles, c'est-à-dire non élastiques, et forment, avec la direction circonférentielle des angles opposés d'une couche à l'autre et au plus égaux au quart de l'angle le plus faible des couches de travail.

Le document FR 2 419 182 décrit et revendique une armature de sommet comprenant une armature de travail, constituée d'au moins deux couches de travail dont les renforts métalliques forment, avec la direction circonférentielle, des angles opposés d'une couche à l'autre et au moins égaux à 30°, et une armature additionnelle ou bloc limiteur, comprenant au moins deux couches dont les renforts métalliques sont très peu extensibles, c'est-à-dire non élastiques, et forment, avec la direction circonférentielle, des angles opposés d'une couche à l'autre et au plus égaux à la moitié de l'angle le plus faible des couches de travail et, de préférence compris entre 5° et 10°.

Il est connu par les documents DE 3327670 A1, correspondant au préambule de la revendication 1, et US 8091600 B2 des structures de pneu comprenant une armature de travail et une armature additionnelle, cette dernière étant de largeur pouvant étre petite.

Par ailleurs, la bande de roulement d'un pneu destiné à équiper un véhicule lourd de type génie civil est pourvue d'un dessin de sculpture formée par la présence d'une pluralité de rainures délimitant une pluralité d'éléments de relief (blocs et / ou nervures). Ces rainures sont destinées à améliorer les performances du pneu en roulage sur tout type de sol et notamment sur des sols boueux. En règle générale, la bande de roulement comprend au moins deux rainures d'orientation circonférentielle et une pluralité de rainures d'orientation transversale ou oblique.

Il a été constaté que la combinaison de la structure interne de renforcement de la partie sommitale et du dessin de sculpture de la bande de roulement pouvait avoir un effet important sur la tenue aux chocs de ladite partie sommitale soit au niveau de la bande de roulement soit au niveau de l'armature de carcasse.

### BREF EXPOSÉ DE L'INVENTION

Les demanderesses se sont donné pour objectif de désensibiliser la partie sommitale d'un pneu radial pour véhicule lourd de type génie civil aux chocs survenant lors de roulages sur des sols sur lequels sont présents de nombreux corps plus ou moins agressifs qui sont générateurs de ces chocs et flexions répétées qui peuvent se traduire par de la fissuration de fatigue dans les matériaus constitutifs de la bande de roulement.

Cet objectif a été atteint, selon l'invention, par un pneu pour véhicule lourd de type génie civil comprenant :
- une partie sommitale prolongée de part et d'autre par des flancs, ces flancs se terminant par des bourrelets,
- une armature de carcasse s'étendant dans la partie sommitale, les flancs et les bourrelets,
- cette partie sommitale comprenant une bande de roulement ayant une épaisseur à user et une armature de sommet, cette dernière étant située radialement entre la bande de roulement et l'armature de carcasse,
- l'armature de sommet comprenant une armature de protection, une armature de travail et une armature additionnelle,
- l'armature de protection comprenant au moins une couche de protection comprenant des renforts métalliques élastiques formant, avec la direction circonférentielle, un angle au moins égal à 10°,
- l'armature de travail comprenant au moins deux couches de travail ayant respectivement une largeur axiale et comprenant des renforts métalliques non élastiques, croisés d'une couche de travail à la suivante et formant, avec la direction circonférentielle, un angle au plus égal à 60°,
- l'armature additionnelle, centrée axialement sur le plan médian équatorial du pneu, comprenant au moins une couche ayant une largeur axiale au plus égale à 0.9 fois la plus petite des largeurs axiales des au moins deux couches de travail et comprenant des renforts métalliques formant, avec la direction circonférentielle, un angle au plus égal à 25°,
- la bande de roulement étant pourvue d'un dessin de sculpture comprenant au une rainure d'orientation circonférentielle de chaque côté du plan médian équatorial, les deux rainures circonférentielles les plus proches du plan médian équatorial délimitant une région centrale ayant une largeur égale à la distance moyenne entre lesdites rainures circonférentielles, la région centrale étant pourvue avec une pluralité de rainures d'orientation oblique ou transversale délimitant une pluralité de blocs, cette bande étant telle que :
- le nombre de blocs sur la région centrale sur toute la périphérie est au moins égal à 42,
- la distance axiale moyenne entre les deux rainures circonférentielles les plus proches du plan médian équatorial est supérieure à la largeur axiale maximale de l'armature additionnelle, cette largeur étant mesurée entre les extrémités des couches de cette armature additionnelle les plus éloignées axialement du plan médian équatorial, les extrémités axiales de cette armature additionnelle étant décalées axialement vers l'intérieur par rapport auxdites deux rainures circonférentielles.

Une rainure d'orientation générale circonférentielle peut être rectiligne ou bien zigzag ou encore ondulante autour d'une position moyenne rectiligne. Il peut en être de même pour les rainures d'orientation transversale ou oblique.

La largeur axiale maximale de l'armature additionnelle est égale à la largeur prise dans la direction axiale entre les extrémités axiales de cette armature les plus éloignées de part et d'autre du plan médian équatorial.

Par « décalées axialement vers l'intérieur » il faut ici comprendre que les extrémités de l'armature additionnelle sont situées entre les rainures et le plan médian équatorial.

Selon un mode de réalisation, l'armature additionnelle est disposée entre l'armature de carcasse et l'armature de travail, cette dernière armature étant surmontée de l'armature de protection.

Selon un mode de réalisation, la profondeur moyenne des rainures circonférentielles est comprise entre 65% et 80% de l'épaisseur de matière à user.

Grâce à ces dispositions, il est possible de réduire le niveau thermique en roulage. L'augmentation du nombre de motifs au tour de roue a pour conséquence une diminution de la longueur des éléments de relief dans la direction circonférentielle. Grâce à l'augmentation de la profondeur des rainures, la rigidité de flexion méridienne des éléments de relief est diminuée ce qui se traduit par une augmentation de la flexion méridienne à l'extrémité du bloc limiteur.

La profondeur de la rainure est limitée à 80% de l'épaisseur de matière à user afin de conserver un lien mécanique suffisant entre la partie épaule de la bande de roulement et le reste de la bande de roulement afin de limiter le risque d'arrachement de matière en cas de sollicitation sous forte dérive et/ou de sollicitation sous forte courbure.

Selon un mode de réalisation préféré, la distance axiale moyenne entre les deux rainures les plus proches du plan médian équatorial au moins égale à 1.1 fois la largeur axiale de l'armature additionnelle et encore plus préférentiellement au moins 1.5 fois la largeur axiale de l'armature additionnelle et au plus 2.1 fois.

Selon un mode de réalisation préféré, une rainure circonférentielle est positionnée sur le plan médian.

Selon un mode de réalisation préféré, l'armature additionnelle comprend au moins deux couches.

Selon une première variante relative aux renforts de chaque couche de l'armature additionnelle, les renforts métalliques de la au moins une couche sont non élastiques.

Selon une deuxième variante relative aux renforts de chaque couche de l'armature additionnelle, les renforts métalliques de la au moins une couche sont élastiques.

Les renforts métalliques élastiques de chaque couche de protection forment préférentiellement, avec la direction circonférentielle, un angle au moins égal à 15° et au plus égal à 40°.

Préférentiellement, les renforts métalliques non élastiques de chaque couche de travail forment, avec la direction circonférentielle, un angle au moins égal à 15° et au plus égal à 45°.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 montre une vue de surface d'une variante de pneu selon l'invention ;
La figure 2 montre une coupe transversale du pneu représenté avec la figure 1.

Ce pneu 1 est de dimension 50/80 R 57. Il comprend une partie sommitale comprenant radialement à l'extérieur une bande de roulement 2 dont une surface constitue une surface de roulement 20 destinée à venir en contact avec un sol lors du roulage. Cette partie sommitale est prolongée de part et d'autre par des flancs 3, ces flancs se terminant chacun par un bourrelet (non montré ici) destiné à venir en contact avec une jante de montage.

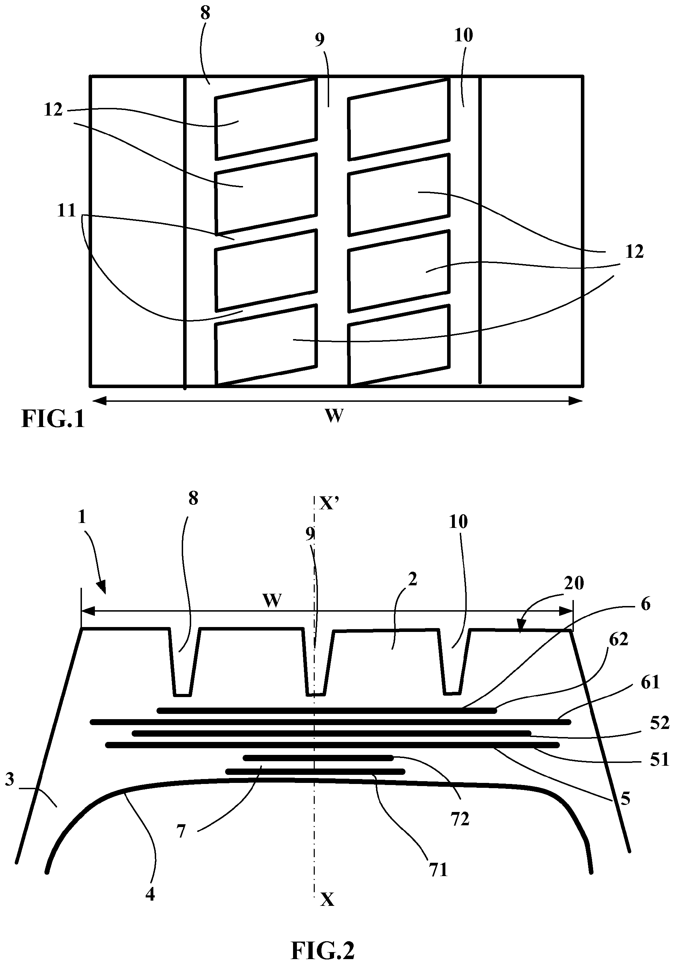

Comme on le voit sur la figure 2, cette structure de pneu est renforcée, en allant de la partie sommitale vers chaque bourrelet, par une armature de carcasse 4 formée dans le cas présent d'une couche de renforcement constituée d'une pluralité de câbles métalliques ancrés à leurs extrémités à des armatures circonférentielles disposées dans chaque bourrelet.

La partie sommitale de ce pneu comprend une armature de renforcement comprenant une armature de travail 5 surmontée d'une armature de protection 6 et d'une armature additionnelle 7 entre l'armature de travail 5 et l'armature de carcasse 4.

L'armature de travail 5 est formée de deux couches de travail :
- une première couche de travail 51 de largeur égale à 802 mm, cette première couche de travail étant composée de câbles constitués par l'assemblage de 77 fils de 0.35 mm de diamètre chacun, chaque câble ayant une force de rupture en traction égale à 1900 daN ; les câbles de cette couche font un angle voisin de 33 degrés avec la direction circonférentielle ;
- une deuxième couche 52 de travail formée avec les mêmes câbles que pour la première couche de travail, ces câbles étant posés avec un angle moyen égal à 19 degrés, ces câbles croisant les câbles de la première couche de travail ; la largeur axiale de cette couche est égale à 711 mm ;

L'armature de travail 5 est surmontée radialement à l'extérieur par une armature de protection 6 constituée de deux couches dites de protection, chaque couche de protection étant constituée d'une pluralité de câbles élastiques formés pour la couche 61 radialement au contact de la deuxième couche de travail 52 par l'assemblage de 24 fils de 0.26 mm de diamètre et pour la deuxième couche de protection 62 de câbles dits élastiques formés par l'assemblage de 52 fils de 0.26 mm de diamètre ; les câbles de chaque couche de protection sont posés pour faire un angle en moyenne égal à 24 degrés. La couche de protection 61 la plus à l'intérieur a une largeur égale à 939 mm tandis que la couche de protection 62 la plus à l'extérieur a une largeur égale à 666 mm.

Enfin, l'armature de travail 5 surmonte radialement un bloc limiteur 7 formant une armature additionnelle et constitué par l'empilement dans la direction radiale de deux couches additionnelles dont les renforts métalliques sont très peu extensibles, c'est-à-dire non élastiques, et forment, avec la direction circonférentielle (perpendiculaire au plan de la figure), des angles opposés d'une couche à l'autre et au plus égaux à la moitié de l'angle le plus faible des couches de travail et dans le cas présent égal à 8 degrés. Ce bloc limiteur 7 comprend une première couche 71 de largeur axiale égale à 451 mm et radialement à l'extérieur de cette première couche une seconde couche 72 de largeur axiale égale à 380 mm. Les câbles composant ces couches 71, 72 sont identiques à ceux des couches de travail 51, 52. Ce bloc limiteur 7 est centré sur le plan médian équatorial (trace XX' sur le plan de la figure) du pneu comme le sont les autres couches de travail et de protection.

La bande de roulement de ce pneu a une largeur W et est pourvue d'un dessin de sculpture comme on le voit avec la figure 1 montrant une vue de la surface de roulement de cette bande. La sculpture de la bande comprend trois rainures principales 8, 9, 10 d'orientation générale circonférentielle faisant le tour complet du pneu. La rainure principale 9 dans le plan médian équatorial XX' a une largeur sur la surface de roulement à l'état neuf égale à 10 mm et une profondeur moyenne égale à 89 mm. Les deux autres rainures principales 8 et 10 de part et d'autre du plan médian équatorial ont des largeurs moyennes égales à 12 mm et des profondeurs moyennes égales à 70 mm.

Chaque rainure principale 8, 10 la plus proche du plan médian équatorial XX' est située à une distance égale à 275 mm de ce plan médian équatorial (cette distance étant prise entre le plan médian et un plan coupant en deux parties égales chaque rainure principale). Les deux rainures 8 et 10 les plus proches du plan médian équatorial délimite une région centrale sur laquelle sont formées plusieurs découpures d'orientation oblique avec la direction transversale, ces rainures d'orientation oblique délimitant avec les rainures circonférentielles une pluralité de blocs de matière sur cette région centrale. Sur la totalité de la périphérie du pneu le nombre de ces blocs est ici égal à 42 (on a donc deux rangées de 42 blocs par la présence d'une rainure circonférentielle sur le plan médian équatorial). Une autre valeur intéressante du nombre de blocs est 49 voire même davantage.

La distance moyenne axiale entre les deux rainures axialement les plus à l'extérieur est ici égale à 550 mm (cette distance est prise entre des plans divisant chaque rainure en deux moitiés égales).

Grâce à cette disposition combinant à la fois un grand nombre de rainures obliques sur la région centrale et la position des extrémités des couches du bloc limiteur 7 par rapport aux rainures principales circonférentielles, il est possible d'améliorer la résistance de la partie sommitale aux chocs et aux flexions répétées lors de roulages sur des sols recouverts de corps agressifs sans pour autant perdre en efficacité.

Dans le cas d'une bande de roulement très large (c'est-à-dire de valeur supérieure à 900 mm, par exemple égale à au moins 1040 mm), il est judicieux de prévoir la présence de quatre rainures principales d'orientation générale circonférentielle, deux rainures principales étant localisées de chaque côté du plan médian équatorial. Dans ce cas, la position des extrémités des couches formant le bloc limiteur est alors déterminée pour que ces extrémités soient situées entre les rainures principales les plus proches du plan médian équatorial et de part et d'autre de ce plan.

L'invention décrite avec un exemple ne saurait être limitée à ce seul exemple et diverses modifications peuvent y être apportées sans sortir du cadre tel que défini par les revendications.

## Revendications

1. Pneu (1) pour véhicule lourd de type génie civil comprenant :
- une partie sommitale prolongée de part et d'autre par des flancs (3), ces flancs se terminant par des bourrelets,
- une armature de carcasse (4) s'étendant dans la partie sommitale, les flancs et les bourrelets, cette partie sommitale comprenant une bande de roulement (2) ayant une épaisseur à user et une armature de sommet, cette dernière étant située radialement entre la bande de roulement (2) et l'armature de carcasse (4),
- l'armature de sommet comprenant une armature de protection (6), une armature de travail (5) et une armature additionnelle (7),
- l'armature de protection (6) comprenant au moins une couche de protection (61, 62) comprenant des renforts métalliques élastiques formant, avec la direction circonférentielle, un angle au moins égal à 10°,
- l'armature de travail (5) comprenant au moins deux couches de travail (51, 52) ayant respectivement une largeur axiale et comprenant des renforts métalliques non élastiques, croisés d'une couche de travail à la suivante et formant, avec la direction circonférentielle, un angle au plus égal à 60°,
- l'armature additionnelle (7), centrée axialement sur le plan médian équatorial du pneu, comprenant au moins une couche (71, 72) ayant une largeur axiale au plus égale à 0.9 fois la plus petite des largeurs axiales des au moins deux couches de travail (51, 52) et comprenant des renforts métalliques formant, avec la direction circonférentielle, un angle au plus égal à 25°,
- la bande de roulement (2) étant pourvue d'un dessin de sculpture comprenant au moins une rainure (8, 10) d'orientation circonférentielle de chaque côté du plan médian équatorial, les deux rainures (8, 10) circonférentielles les plus proches du plan médian équatorial délimitant une région centrale ayant une largeur égale à la distance moyenne entre lesdites rainures circonférentielles,
la région centrale étant pourvue avec une pluralité de rainures d'orientation oblique ou transversale de manière à former une pluralité de blocs,
ce pneu étant **caractérisé en ce que** :
- le nombre de blocs sur la région centrale sur toute la périphérie est au moins égal à 42,
- la distance axiale moyenne entre les deux rainures circonférentielles (10) les plus proches du plan médian équatorial est supérieure à la largeur axiale maximale de l'armature additionnelle (7), cette largeur étant mesurée entre les extrémités des couches de cette armature additionnelle (7) les plus éloignées axialement du plan médian équatorial, les extrémités axiales de cette armature additionnelle étant décalées axialement vers l'intérieur par rapport auxdites deux rainures circonférentielles (10).

2. Pneumatique (1) pour véhicule lourd de type génie civil selon la revendication 1, **caractérisé en ce que** la profondeur moyenne des rainures circonférentielles (8, 10) est comprise entre 65% et 80% de l'épaisseur de matière à user.

3. Pneumatique (1) pour véhicule lourd de type génie civil selon l'une des revendications 1 ou 2, **caractérisé en ce que** la distance axiale moyenne entre les deux rainures les plus proches du plan médian équatorial est au moins égale à 1.1 fois la largeur axiale de l'armature additionnelle

4. Pneumatique (1) pour véhicule lourd de type génie civil selon la revendication 3 **caractérisé en ce que** la distance axiale moyenne entre les deux rainures les plus proches du plan médian équatorial est au moins 1.5 fois la largeur axiale de l'armature additionnelle et au plus 2.1 fois.

5. Pneumatique (1) pour véhicule lourd de type génie civil selon l'une quelconque des revendications 1 à 4, **caractérisé en ce qu'**une rainure circonférentielle est en outre positionnée sur le plan médian pour diviser la région centrale en deux moitiés.

6. Pneumatique (1) pour véhicule lourd de type génie civil selon l'une quelconque des revendications 1 à 5, **caractérisé en ce que** l'armature additionnelle comprend au moins deux couches.

7. Pneumatique (1) pour véhicule lourd de type génie civil selon la revendication 6, **caractérisé en ce que** les renforts métalliques d'au moins une couche de l'armature additionnelle sont non élastiques.

8. Pneumatique (1) pour véhicule lourd de type génie civil selon la revendication 7, **caractérisé en ce que** les renforts métalliques d'au moins une couche de l'armature additionnelle sont élastiques.

9. Pneumatique (1) pour véhicule lourd de type génie civil selon l'une quelconque des revendications 1 à 8, **caractérisé en ce que** les renforts métalliques élastiques de chaque couche de protection forment préférentiellement, avec la direction circonférentielle, un angle au moins égal à 15° et au plus égal à 40°.

## Patentansprüche

1. Reifen (1) für ein Schwerfahrzeug vom Typ eines Baufahrzeugs, welcher umfasst:
- einen Scheitelabschnitt, der auf beiden Seiten durch Seitenwände (3) verlängert ist, wobei diese Seitenwände in Wülsten enden,
- eine Karkassenbewehrung (4), die sich im Scheitelabschnitt, in den Seitenwänden und den Wülsten erstreckt, wobei dieser Scheitelabschnitt einen Laufstreifen (2) mit einer zu verschleißenden Dicke und eine Scheitelbewehrung umfasst, wobei sich diese letztere radial zwischen dem Laufstreifen (2) und der Karkassenbewehrung (4) befindet,
- wobei die Scheitelbewehrung eine Schutzbewehrung (6), eine Arbeitsbewehrung (5) und eine zusätzliche Bewehrung (7) umfasst,
- wobei die Schutzbewehrung (6) wenigstens eine Schutzschicht (61, 62) umfasst, die elastische metallische Festigkeitsträger umfasst, die mit der Umfangsrichtung einen Winkel von wenigstens 10° bilden,
- wobei die Arbeitsbewehrung (5) wenigstens zwei Arbeitsschichten (51, 52) umfasst, die jeweils eine axiale Breite aufweisen und nichtelastische metallische Festigkeitsträger umfassen, die sich von einer Arbeitsschicht zur nächsten überkreuzen und mit der Umfangsrichtung einen Winkel von höchstens 60° bilden,
- wobei die zusätzliche Bewehrung (7), die axial zur äquatorialen Mittelebene des Reifens zentriert ist, wenigstens eine Schicht (71, 72) umfasst, die eine axiale Breite aufweist, welche höchstens gleich dem 0,9-fachen der kleinsten der axialen Breiten der wenigstens zwei Arbeitsschichten (51, 52) ist, und metallische Festigkeitsträger umfasst, die mit der Umfangsrichtung einen Winkel von höchstens 25° bilden,
- wobei der Laufstreifen (2) mit einem Profilmuster versehen ist, das beiderseits der äquatorialen Mittelebene wenigstens eine in Umfangsrichtung verlaufende Rille (8, 10) umfasst, wobei die zwei Umfangsrillen (8, 10), die der äquatorialen Mittelebene am nächsten sind, einen mittleren Bereich mit einer Breite begrenzen, der gleich dem mittleren Abstand zwischen den Umfangsrillen ist,
wobei der mittlere Bereich mit mehreren schräg oder quer ausgerichteten Rillen versehen ist, so dass mehrere Blöcke gebildet werden,
wobei dieser Reifen **dadurch gekennzeichnet ist, dass**:
- die Anzahl der Blöcke auf dem mittleren Bereich auf dem gesamten Umfang wenigstens gleich 42 ist,
- der mittlere axiale Abstand zwischen den zwei Umfangsrillen (10), die der äquatorialen Mittelebene am nächsten sind, größer als die maximale axiale Breite der zusätzlichen Bewehrung (7) ist, wobei diese Breite zwischen den Enden der Schichten dieser zusätzlichen Bewehrung (7) gemessen wird, die von der äquatorialen Mittelebene axial am weitesten entfernt sind, wobei die axialen Enden dieser zusätzlichen Bewehrung bezüglich der zwei Umfangsrillen (10) axial nach innen versetzt sind.

2. Reifen (1) für ein Schwerfahrzeug vom Typ eines Baufahrzeugs nach Anspruch 1, **dadurch gekennzeichnet, dass** die mittlere Tiefe der Umfangsrillen (8, 10) zwischen 65 % und 80 % der zu verschleißenden Materialdicke liegt.

3. Reifen (1) für ein Schwerfahrzeug vom Typ eines Baufahrzeugs nach einem der Ansprüche 1 oder 2, **dadurch gekennzeichnet, dass** der mittlere axiale Abstand zwischen den zwei Rillen, die der äquatorialen Mittelebene am nächsten sind, wenigstens gleich dem 1,1-fachen der axialen Breite der zusätzlichen Bewehrung ist.

4. Reifen (1) für ein Schwerfahrzeug vom Typ eines Baufahrzeugs nach Anspruch 3, **dadurch gekennzeichnet, dass** der mittlere axiale Abstand zwischen den zwei Rillen, die der äquatorialen Mittelebene am nächsten sind, wenigstens gleich dem 1,5-fachen der axialen Breite der zusätzlichen Bewehrung und höchstens gleich deren 2,1-fachem ist.

5. Reifen (1) für ein Schwerfahrzeug vom Typ eines Baufahrzeugs nach einem der Ansprüche 1 bis 4, **dadurch gekennzeichnet, dass** eine Umfangsrille außerdem auf der Mittelebene positioniert ist, um den mittleren Bereich in zwei Hälften zu teilen.

6. Reifen (1) für ein Schwerfahrzeug vom Typ eines Baufahrzeugs nach einem der Ansprüche 1 bis 5, **dadurch gekennzeichnet, dass** die zusätzliche Bewehrung wenigstens zwei Schichten umfasst.

7. Reifen (1) für ein Schwerfahrzeug vom Typ eines Baufahrzeugs nach Anspruch 6, **dadurch gekennzeichnet, dass** die metallischen Festigkeitsträger wenigstens einer Schicht der zusätzlichen Bewehrung nicht elastisch sind.

8. Reifen (1) für ein Schwerfahrzeug vom Typ eines Baufahrzeugs nach Anspruch 7, **dadurch gekennzeichnet, dass** die metallischen Festigkeitsträger wenigstens einer Schicht der zusätzlichen Bewehrung elastisch sind.

9. Reifen (1) für ein Schwerfahrzeug vom Typ eines Baufahrzeugs nach einem der Ansprüche 1 bis 8, **dadurch gekennzeichnet, dass** die elastischen metallischen Festigkeitsträger jeder Schutzschicht vorzugsweise mit der Umfangsrichtung einen Winkel bilden, der mindestens gleich 15° und höchstens gleich 40° ist.

## Claims

1. Tyre (1) for a heavy vehicle of civil engineering type, comprising:
- a crown part extended on each side by sidewalls (3), these sidewalls ending in beads,
- a carcass reinforcement (4) extending into the crown part, the sidewalls and the beads, this crown part comprising a tread (2) having a wearing thickness and a crown reinforcement, the latter being situated radially between the tread (2) and the carcass reinforcement (4),
- the crown reinforcement comprising a protective reinforcement (6), a working reinforcement (5) and an additional reinforcement (7),
- the protective reinforcement (6) comprising at least one protective layer (61, 62) comprising elastic metal reinforcers which form, with the circumferential direction, an angle at least equal to 10°,
- the working reinforcement (5) comprising at least two working layers (51, 52) having a respective axial width and comprising inelastic metal reinforcers crossed from one working layer to the next and forming, with the circumferential direction, an angle at most equal to 60°,
- the additional reinforcement (7), centred axially on the equatorial midplane of the tyre, comprising at least one layer (71, 72) having an axial width at most equal to 0.9 times the shortest of the axial widths of the at least two working layers (51, 52) and comprising metal reinforcers which form, with the circumferential direction, an angle at most equal to 25°,
- the tread (2) being provided with a tread pattern design comprising at least one circumferentially oriented groove (10) on each side of the equatorial midplane, the two circumferential grooves (10) closest to the equatorial midplane delimiting a central region having a width equal to the mean distance between the said circumferential grooves,
the central region being provided with a plurality of grooves of oblique or transverse orientation so as to form a plurality of blocks,
this tyre being **characterized in that**:
- the number of blocks in the central region over the entire periphery is at least equal to 42,
- the mean axial distance between the two circumferential grooves (10) closest to the equatorial midplane is greater than the maximum axial width of the additional reinforcement (7), this width being measured between the ends of the layers of this additional reinforcement (7) that are axially furthest from the equatorial midplane, the axial ends of this additional reinforcement being offset axially towards the inside with respect to the said two circumferential grooves (10).

2. Tyre (1) for a heavy vehicle of civil engineering type according to Claim 1, **characterized in that** the mean depth of the circumferential grooves (10) is comprised between 65% and 80% of the wearing thickness of material.

3. Tyre (1) for a heavy vehicle of civil engineering tyre according to one of Claims 1 and 2, **characterized in that** the mean axial distance between the two grooves closest to the equatorial midplane is at least equal to 1.1 times the axial width of the additional reinforcement.

4. Tyre (1) for a heavy vehicle of civil engineering tyre according to Claim 3, **characterized in that** the mean axial distance between the two grooves closest to the equatorial midplane is at least 1.5 times the axial width of the additional reinforcement and at most 2.1 times.

5. Tyre (1) for a heavy vehicle of civil engineering type according to any one of Claims 1 to 4, **characterized in that** a circumferential groove is also positioned on the midplane in order to split the central region into two halves.

6. Tyre (1) for a heavy vehicle of civil engineering type according to any one of Claims 1 to 5, **characterized in that** the additional reinforcement comprises at least two layers.

7. Tyre (1) for a heavy vehicle of civil engineering type according to Claim 6, **characterized in that** the metal reinforcers of at least one layer of the additional reinforcement are inelastic.

8. Tyre (1) for a heavy vehicle of civil engineering type according to Claim 7, **characterized in that** the metal reinforcers of at least one layer of the additional reinforcement are elastic.

9. Tyre (1) for a heavy vehicle of civil engineering type according to any one of Claims 1 to 8, **characterized in that** the elastic metal reinforcers of each protective layer preferably form, with the circumferential direction, an angle at least equal to 15° and at most equal to 40°.
